## Europäisches Patentamt
## European Patent Office
## Office européen des brevets

(11) Veröffentlichungsnummer: **0 253 017**
**B1**

(12) **EUROPÄISCHE PATENTSCHRIFT**

(45) Veröffentlichungstag der Patentschrift:
**12.09.90**

(51) Int. Cl.⁵: **G01S 17/42**, G01S 17/02,
G01S 7/48

(21) Anmeldenummer: **86113889.9**

(22) Anmeldetag: **07.10.86**

(54) Vermessungssystem und Vermessungsverfahren.

(30) Priorität: **09.07.86 DE 3623083**

(43) Veröffentlichungstag der Anmeldung:
**20.01.88 Patentblatt 88/3**

(45) Bekanntmachung des Hinweises auf die Patenterteilung:
**12.09.90 Patentblatt 90/37**

(84) Benannte Vertragsstaaten:
**AT BE CH DE ES FR GB GR IT LI LU NL SE**

(56) Entgegenhaltungen:
**DE-A- 2 149 701**
**FR-A- 2 186 658**
**GB-A- 1 088 337**
**GB-A- 2 082 867**
**GB-A- 2 143 396**
**US-A- 3 848 999**

(73) Patentinhaber: **Precitronic Gesellschaft für Feinmechanik und Electronic m.b.H, Leverkusenstrasse 13, D-2000 Hamburg 50(DE)**

(72) Der Erfinder hat auf seine Nennung verzichtet

(74) Vertreter: **Glawe, Delfs, Moll & Partner Patentanwälte, Postfach 26 01 62 Liebherrstrasse 20, D-8000 München 26(DE)**

ACTORUM AG

**Beschreibung**

Die Erfindung betrifft ein Vermessungssystem zum Vermessen eines Objektes und ein entsprechendes Vermessungsverfahren.

Das Vermessen von Objekten, d.h. die Bestimmung ihres Ortes, ihrer Entfernung, ihrer Geschwindigkeit, ihrer Lage usw. ist normalerweise sehr aufwendig. Es müssen mit Hilfe entsprechender Theodoliten oder dergleichen die Lage des Objektes bestimmt werden; die entsprechenden Meßwerte müssen dann aufgeschrieben und ausgewertet werden. Dies ist sehr aufwendig und insbesondere bei bewegten Objekten schwierig oder gar nicht durchzuführen, falls sich das Objekt zu schnell bewegt.

Die Aufgabe der Erfindung besteht darin, ein einfaches Vermessungssystem und Vermessungsverfahren zu schaffen, mit dem einfach, schnell und sehr stark automatisiert die Vermessung durchgeführt werden kann.

Die erfindungsgemäße Lösung besteht darin, daß das Objekt zwei in bekanntem Abstand angeordnete Retroreflektoren aufweist und daß ein Vermessungsgerät vorgesehen ist, das mit einer Lichtquelle, einer Viodekamera und einer Einrichtung versehen ist, die die Vermessung mit Hilfe der beiden Bildpunkte durchführt, die vom von den Retroreflektoren reflektierten Licht gebildet werden.

Retroreflektoren, insbesondere Tripelspiegel, haben die Eigenschaft, das Licht mit sehr kleiner Streuung im wesentlichen in die Richtung zurückzureflektieren, aus der es kommt. Beleuchtet man also das Objekt mit der Lichtquelle, so können in der Nähe der Lichtquelle mit einer Videokamera auch bei großer Entfernung des Objektes die von den Retroreflektoren reflektierten Lichtstrahlen deutlich festgestellt und aufgenommen werden. Die Orte dieser Bildpunkte im Bild der Videokamera können dann bestimmt werden, was automatisch mit Hilfe entsprechender Rechner und dergleichen erfolgen kann. Aufgrund der bekannten Geometrie der Anordnung, z.B. der Brennweite und sonstigen Abbildungseigenschaften der Videokamera, der momentanen Ausrichtung der Viodekamera sowie des bekannten Abstandes der Retroreflektoren kann dann die Vermessung durchgeführt werden.

Als Lichtquelle kann dabei eine Weißlichtquelle verwendet werden. Auch eine Infrarotlichtquelle kann verwendet werden, was insbesondere das Vermessen während des Tages erleichtert.

Zweckmäßigerweise wird als Lichtquelle keine kontinuierliche Lichtquelle verwendet, sondern eine Lichtquelle, die Lichtblitze abgibt, z B. eine Blitzlampe. Dabei sind vorteilhafterweise die Lichtblitze mit der Abtastfrequenz der Viodekamera synchronisiert. Auf diese Weise wird einmal vermieden, daß das Bild der Retroreflektoren in ungünstigen Momenten des Abtastzyklus von der Kamera aufgenommen wird. Außerdem können durch diese Synchronisation die Probleme leichter gemeistert werden, die insbesondere am Tage dadurch auftreten, daß das Bild des von den Retroreflektoren reflektierten Lichts vom Tageslicht überstrahlt wird.

Mit Hilfe solcher Lichtblitze und entsprechend synchronisierter Videokameras können auch Bewegungen des Objektes leichter festgestellt und vermessen werden.

Man könnte zwar als Videokamera eine normale Zeilenkamera verwenden. Besonders vorteilhaft ist aber eine Matrix-CCD- Kamera, weil hier ein direkter Zugriff des Rechners auf die einzelnen Matrixpunkte möglich ist.

Besonders vorteilhaft ist es, wenn das Vermessungsgerät Einrichtungen zur Bestimmung der Entfernung des Objektes aufgrund des Abstandes der beiden Bildpunkte aufweist. Auf diese Weise ist eine besonders einfache Bestimmung des Abstandes ohne komplizierte Laufzeitmessungen, wie dies z.B. bei Laserentfernungsmessungen der Fall ist, möglich. Die Entfernung des Objektes kann dabei aus dem bekannten Abstand der Retroreflektoren und der Abbildungsgeometrie bestimmt werden.

Vorteilhafterweise ist das Vermessungsgerät mit Einrichtungen zur Bestimmung der Relativgeschwindigkeit des Objekts versehen. Es kann also nicht nur der momentane Ort des Objektes festgestellt werden, sondern auch seine Bewegung genau erfaßt werden. Dabei handelt es sich um die Relativgeschwindigkeit. Steht das Vermessungsgerät selbst fest, so ist diese Relativgeschwindigkeit gleich der tatsächlichen Geschwindigkeit des Objekts. Bewegt sich auch das Vermessungsgerät, so muß von der Relativgeschwindigkeit noch die Geschwindigkeit des Vermessungsgeräts subtrahiert werden, um die Absolutgeschwindigkeit des Objekts zu bestimmen.

Bei einer weiteren vorteilhaften Ausführungsform ist das Vermessungsgerät mit Einrichtungen zur Bestimmung der Verkantung des Objekts relativ zum Vermessungsgerät versehen. Es kann auf diese Weise nicht nur die Verkantung festgestellt werden, wenn das Objekt nicht senkrecht steht, d.h. die beiden Retroreflektoren nicht genau übereinander oder nebeneinander angeordnet sind. Es kann vielmehr unter Berücksichtigung dieser Verkantung dann auch die richtige Entfernung besser bestimmt werden. Selbstverständlich ist auch die Entfernungsmessung ohne eine ausdrückliche Verkantungsmessung möglich, indem die Verkantung automatisch berücksichtigt wird.

Steht das Objekt fest oder bewegt es sich nur in einem sehr kleinen Bereich, so kann das Vermessungsgerät feststehen. Bewegt sich das Objekt aber stärker, so kann eine Nachführeinrichtung für das Vermessungsgerät vorgesehen sein, so daß das Objekt auch bei verhältnismäßig kleinem Abbildungswinkel des Vermessungsgeräts immer im Bildfeld verbleibt.

Vorteilhafterweise sind Einrichtungen zum Übertragen von Information vom Vermessungsgerät zum Objekt vorgesehen. Auf diese Weise kann vom Vermessungsgerät aus z.B. das Objekt an verschiedene Orte dirigiert werden, um so die Vermessung eines Geländes durchzuführen. Die Übertragung der Information kann dabei mit Hilfe von Licht geschehen, z.B. durch das Licht der Lichtquelle. Zu diesem Zweck kann das Licht der Lichtquelle entsprechend moduliert werden, z.B. durch Variation der Blitzwiederholungsfrequenz.

Die Informationsübertragung wird aber bei einer anderen vorteilhaften Ausführungsform mit einem eng gebündelten Strahl, insbesondere einem Laserstrahl oder einem Mikrowellenstrahl oder durch einen Datenfunksender bewirkt. Auf diese Weise ist für die Informationsübertragung weniger Energie notwendig. Außerdem kann Laserlicht, Mikrowellenstrahlung oder Radiostrahlung einfacher und besser sowie mit größerer Bandbreite moduliert werden als gewöhnliches Licht. Schließlich besteht noch ein weiterer Vorteil der engen Bündelung darin, daß Unbefugte die Informationsübertragung nicht anzapfen können.

Weist die Videokamera ein Objektiv variabler Brennweite auf sowie Einrichtungen zum Auswerten mehrerer mit verschiedenen Bildwinkeln aufgenommener Aufnahmen zur Bestimmung der Entfernung, so kann die Entfernungsmessung genauer durchgeführt werden. Dies beruht auf folgender Erkenntnis.

Bei großen Entfernungen kann folgender Nachteil auftreten. Die Viodeokamera, z.B. die Matrix-CCD-Kamera oder eine Zeilenkamera, hat in Vertikal- (und auch in Horizontal-) Richtung eine begrenzte Auflösung von z.B. 500 Bildpunkten oder Pixeln. Dies führt auch zu einer begrenzten Genauigkeit der Entfernungsmessung, wie dies am folgenden Beispiel verdeutlicht wird.

Das Objekt soll eine Entfernung von 1 km haben, die Retroreflektoren am Objekt sollen eine vertikale Entfernung von 1 m haben. Die Abbildungsgeometrie soll weiter so sein, daß die Bilder der beiden Retroreflektoren im Fernsehbild einen Abstand von 25 Pixeln haben. In diesem Falle fällt das Bild eines Reflektors, wenn das Bild des anderen Reflektors festgehalten wird, erst auf den nächsten Bildpunkt (Pixel), wenn sich die Entfernung des Objekts um 40 m vergrößert oder verkleinert. Diese Ungenauigkeit wird größer, wenn die Objektentfernung größer wird. Bei 3 km Abstand hätten die beiden Bilder der Retroreflektoren nur noch einen Abstand von 8 Pixeln. Erst wenn sich die Entfernung um ein Achtel ändert, d h. um ungefähr 375 m, würde das Bild des Retroreflektors auf den nächsten Bildpunkt fallen, d.h. daß die entsprechende Ungenauigkeit größer wäre also 350 m.

Diese Probleme können nun vermieden werden bzw. zumindest sehr stark verkleinert werden, wenn die Videokamera ein Objektiv variabler Brennweite aufweist und Einrichtungen zum Auswerten mehrerer mit verschiedenen Bildwinkeln aufgenommenen Aufnahmen zur Bestimmung der Entfernung vorgesehen sind. Es wird in diesem Falle nicht erst eine Entfernungsänderung festgestellt, wenn das Bild auf den nächsten Bildpunkt fällt. Vielmehr werden mehrere solcher Aufnahmen gemacht, bei denen das Bild mehr oder weniger stark schon zum nächsten Bildpunkt gewandert ist, also unterschiedlich stark auf zwei benachbarten Bildpunkten detektiert wird. Hieraus kann mit elektronischen Mitteln eine Helligkeitsverteilung berechnet werden, die nach elektronischer Feststellung des Mittelwertes zu einer wesentlich genaueren Entfernungsmessung führt.

Vorteilhafterweise sind Einrichtungen zum Anzeigen/Ausdrucken der Ergebnisse vorgesehen. Insbesondere dann, wenn viele Meßwerte ausgedruckt werden sollen, ist es wegen der begrenzten Geschwindigkeit des Druckers vorteilhaft, einen Zwischenspeicher für die Ergebnisse vorzusehen.

Die Vermessung kann auf einfache Weise durchgeführt werden, wenn das Vermessungsgerät selbst feststeht oder eine bekannte Bewegung ausführt. Steht das Vermessungsgerät aber nicht fest und führt eine nicht genau bekannte Eigenbewegung durch, so werden vorteilhafterweise Einrichtungen zum Beleuchten eines Ausschnittes der unmittelbaren Umgebung des Vermessungsgeräts, Einrichtungen zum Abbilden dieses Ausschnitts mit der Kamera und Einrichtungen zur Bestimmung der Eigenbewegung des Vermessungsgeräts aufgrund von Änderungen des Bildes des Ausschnittes vorgesehen.

Der entsprechende Teil der Umgebung, der durch einen Teilstrahl beleuchtet wird und in das Videobild eingespiegelt wird, könnte z. B. der Boden in der Umgebung sein. Bewegt sich das Vermessungsgerät, so bewegt sich auch der Bildausschnitt des Bodens. Aus der Wanderungsgeschwindigkeit der Grautöne dieses Bildes, die elektronisch bestimmt werden kann, kann dann die Eigenbewegung des Vermessungsgerätes bestimmt werden. Ist aber diese Eigenbewegung bekannt, so können nicht nur Relativgeschwindigkeiten des Objektes, sondern auch dessen absolute Geschwindigkeiten bestimmt werden.

Die Erfindung kennzeichnet sich auch noch durch ein Verfahren zum Vermessen eines Objekts, das dadurch ausgezeichnet ist, daß das Objekt mit zwei in bekanntem Abstand zueinander angeordneten Retroreflektoren versehen wird und mit einer Lichtquelle beleuchtet wird, daß das Bild des von den Retroreflektoren reflektierten Lichts mit einer Videokamera aufgenommen wird, und daß die Vermessung durch Auswertung der Orte und Bewegungen der Bildpunkte der Retroreflektoren durchgeführt wird.

Wenn hier von Retroreflektoren die Rede ist, so müssen dies keinesfalls gewöhnliche Tripelspiegel sein, die immer nur einen gewissen Öffnungswinkel von höchstens 60° haben. Vielmehr kann unter einem Retroreflektor auch eine ganze Anordnung von solchen Tripelspiegeln vorgesehen sein, die z.B. um eine Stange herum angeordnet sind, so daß die reflektierende Wirkung nach allen Richtungen auftritt. Auf diese Weise ist die Vermessung auch dann möglich, wenn sich das Objekt, z.B. eine Stange, um ihre eigene Achse während der Vermessung dreht.

Die Erfindung wird im folgenden anhand einer vorteilhaften Ausführungsform unter Bezugnahme auf die beigefügten Zeichnungen beschrieben. Es zeigen:

Fig. 1 in schematischer Darstellung eine Ausführungsform des erfindungsgemäßen Vermessungssystems, und

Fig. 2 das Videobild, das bei dieser Ausführungsform ausgewertet wird.

Das Vermessungssystem weist ein mit einer strichpunktierten Linie angedeutetes Vermessungsgerät (1) und ein Ziel (2) auf, das z.B. die Form einer Vermessungsstange hat. Am Ziel (2) sind zwei Retroreflektoren (3 u. 4) bzw. entsprechende Retroreflektoren vorgesehen.

Das Vermessungsgerät (1) weist eine Lichtquelle (5) auf, z.B. eine Blitzlichtlampe im Weißlichtbereich oder Infrarotbereich, die einen Lichtkegel (6) aussendet, der auf das Ziel (2) gerichtet ist. Die Blitzsequenz der Lichtquelle (5) wird dabei durch eine elektronische Schaltung (6) eingestellt, die mit der Zeilenabtastfrequenz bzw. Bildabtastfrequenz einer Videokamera (7) synchronisiert ist, die vorteilhafterweise eine Matrix-CCD-Kamera ist. Das von den Retroreflektoren (3 u. 4) reflektierte Licht wird mit Hilfe dieser Fernsehkamera (7) aufgenommen, die zu diesem Zweck mit einem Objektiv (8) versehen ist, das noch eine variable Brennweite haben kann.

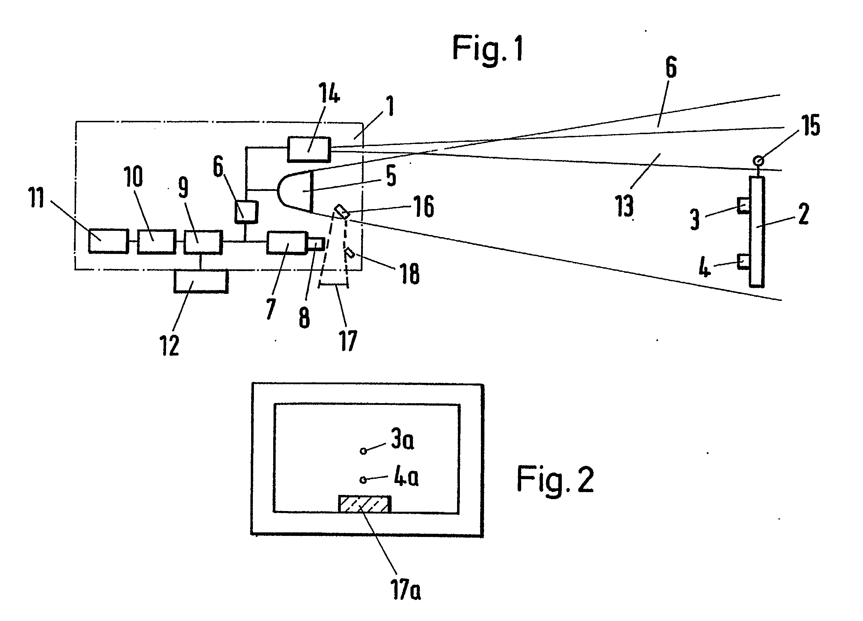

Der Ort der beiden Bildpunkte der Retroreflektoren (3 u. 4) (diese Bildpunkte sind in Fig. 2 mit 3a und 4a bezeichnet) wird elektronisch in einer Schaltung (9) ausgewertet, mit der der Ort des Objektes (2), die seitliche Bewegung des Objektes (2), eine eventuelle senkrechte Bewegung und auch eine Verkantung des Objektes (2) bestimmt werden kann. Besonders vorteilhaft ist dabei, wenn die Kamera (7) eine Matrix-CCD-Kamera ist, da dann ein direkter Zugriff des Rechners in der Einheit (9) auf die einzelnen Bildpunkte möglich ist.

Die Ergebnisse werden dann in einem Zwischenspeicher (10) zwischengespeichert und auf einer Anzeige (11) angezeigt bzw. dort ausgedruckt.

Mit Hilfe der zentralen Recheneinheit (9) wird über eine Einrichtung (12) noch das Vermessungsgerät (1) dem Objekt (2) nachgeführt, so daß der Lichtkegel (6) auch dann auf das Objekt (2) gerichtet bleibt, wenn sich dieses Objekt bewegt bzw. sich das Vermessungsgerät (1) bewegt. Gleichzeitig wird dadurch auch der scharf gebündelte Strahl (13) eines Lasers (14) auf das Objekt (2) gerichtet bzw. auf einen Empfänger (15) für die Laserstrahlung am Objekt (2), so daß hier durch Modulation des Laserstrahls (13) Information vom Vermessungsgerät zum Objekt (2) übertragen werden kann.

Durch einen im unteren Bereich vor der Lichtquelle (5) angeordneten kleinen Spiegel (16) wird ein Teil des Lichtstrahles nach unten abgelenkt, wie dies mit gestrichelten Linien dargestellt ist. Auf diese Weise wird ein Bodenbereich (17) beleuchtet. Dieser Bodenbereich wird dann ebenfalls von der Videokamera (7) aufgenommen, und zwar mit Hilfe eines weiteren kleinen Spiegels (18), der das Bild dieses Bodenbereiches in die Videokamera einspiegelt. Auf diese Weise erhält man den mit (17a) in Fig. 2 dargestellten, eingespiegelten Bodenbereich mit unterschiedlichen Grautönen.

Bewegt sich nun das Vermessungsgerät (1), so führt dies zu einer Wanderung der Grautöne, aus denen dann mit Hilfe der Schaltung (9) die Eigengeschwindigkeit des Vermessungsgerätes (1) bestimmt werden kann. Dies erlaubt dann aus der Messung des Relativortes und der Relativgeschwindigkeit des Objektes (2) die Bestimmung des absoluten Ortes und der absoluten Geschwindigkeit des Objektes (2).

## Patentansprüche

1. Vermessungssystem zum Vermessen eines Objektes, dadurch gekennzeichnet, daß das Objekt (2) zwei in bekanntem Abstand angeordnete Retroreflektoren (3, 4) aufweist und daß ein Vermessungsgerät (1) vorgesehen ist, das mit einer Lichtquelle (5), einer Videokamera (7, 8) und einer Einrichtung (9) versehen ist, die die Vermessung mit Hilfe der beiden Bildpunkte (3a, 4a) durchführt, die vom von den Retroreflektoren (3, 4) reflektierten Licht gebildet werden.

2. Vermessungssystem nach Anspruch 1, dadurch gekennzeichnet, daß die Lichtquelle (5) eine Weißlichtquelle ist.

3. Vermessungssystem nach Anspruch 1, dadurch gekennzeichnet, daß die Lichtquelle (5) eine Infrarotlichtquelle ist.

4. Vermessungssystem nach einem der Ansprüche 1 bis 3, dadurch gekennzeichnet, daß die Lichtquelle (5) Lichtblitze abgibt.

5. Vermessungssystem nach Anspruch 4, dadurch gekennzeichnet, daß die Lichtblitze mit der Abtastfrequenz der Videokamera (7, 8) synchronisiert sind.

6. Vermessungssystem nach einem der Ansprüche 1 bis 5, dadurch gekennzeichnet, daß die Videokamera (7, 8) eine Matrix-CCD-Kamera ist.

7. Vermessungssystem nach einem der Ansprüche 1 bis 6, dadurch gekennzeichnet, daß das Vermessungsgerät (1) Einrichtungen (9) zur Bestimmung der Entfernung des Objekts (2) aufgrund des Abstandes der beiden Bildpunkte (3a, 4a) aufweist.

8. Vermessungssystem nach einem der Ansprüche 1 bis 7, dadurch gekennzeichnet, daß das Vermessungsgerät (1) Einrichtungen (9) zur Bestimmung der Relativgeschwindigkeit des Objekts aufweist.

9. Vermessungssystem nach einem der Ansprüche 1 bis 8, dadurch gekennzeichnet, daß das Vermessungsgerät (1) Einrichtungen (9) zur Bestimmung der Verkantung des Objekts (2) relativ zum Vermessungsgerät (1) aufweist.

10. Vermessungssystem nach einem der Ansprüche 1 bis 9, dadurch gekennzeichnet, daß sie eine Nachführeinrichtung (12) für das Vermessungsgerät (1) aufweist.

11. Vermessungssystem nach einem der Ansprüche 1 bis 10, dadurch gekennzeichnet, daß sie Einrichtungen (14, 15) zum Übertragen von Information vom Vermessungsgerät (1) zum Objekt (2) aufweist.

12. Vermessungssystem nach Anspruch 11, dadurch gekennzeichnet, daß die Übertragung der Information mit Hilfe von Licht geschieht.

13. Vermessungssystem nach Anspruch 11 oder 12, dadurch gekennzeichnet, daß die Informationsübertragung mit einem eng gebündelten Strahl, insbesondere einem Laserstrahl oder einem Mikrowellenstrahl bewirkt wird.

14. Vermessungssystem nach einem der Ansprüche 1 bis 13, dadurch gekennzeichnet, daß die Videokamera (7, 8) ein Objektiv (8) variabler Brennweite aufweist und Einrichtungen (9) zum Auswerten mehrerer mit verschiedenen Bildwinkeln aufgenommener Aufnahmen zur Bestimmung der Entfernung vorgesehen sind.

15. Vermessungssystem nach einem der Ansprüche 1 bis 14, dadurch gekennzeichnet, daß sie Einrichtungen (11) zum Anzeigen/Ausdrucken der Ergebnisse aufweist.

16. Vermessungssystem nach Anspruch 15, dadurch gekennzeichnet, daß sie einen Zwischenspeicher (10) für die Ergebnisse aufweist.

17. Vermessungssystem nach einem der Ansprüche 1 bis 16, dadurch gekennzeichnet, daß sie Einrichtungen (16) zum Beleuchten eines Ausschnittes (17) der unmittelbaren Umgebung des Vermessungsgeräts, Einrichtungen (18) zum Abbilden dieses Ausschnitts (17) mit der Kamera (7, 8) und Einrichtungen (9) zur Bestimmung der Eigenbewegung des Vermessungsgeräts (1) aufgrund von Änderungen des Bildes (17a) des Ausschnitts (17) aufweist.

18. Verfahren zum Vermessen eines Objekts, dadurch gekennzeichnet, daß das Objekt mit zwei in bekanntem Abstand zueinander angeordneten Retroreflektoren versehen wird und mit einer Lichtquelle beleuchtet wird, und daß das Bild von den Retroreflektoren des reflektierten Lichts mit einer Videokamera aufgenommen wird, und daß die Vermessung durch Auswertung der Orte und Bewegungen der Bildpunkte der Retroreflektoren durchgeführt wird.

## Revendications

1. Système d'arpentage pour le mesurage d'un objet, caractérisé en ce que l'objet (3) présente deux rétroréflecteurs (3, 4) disposés à une distance connue l'un de l'autre, et en ce qu'il est prévu un appareil de mesurage (1) qui est muni d'une source lumineuse (5), d'une caméra vidéo (7, 8) et d'un dispositif (9) qui effectue le mesurage au moyen des deux points d'image (3a, 4a) qui sont formés par la lumière réfléchie par les rétroréflecteurs (3, 4).

2. Système d'arpentage selon la revendication 1, caractérisé en ce que la source lumineuse (5) est une source de lumière blanche.

3. Système d'arpentage selon la revendication 1, caractérisé en ce que la source lumineuse (5) est une source de lumière infrarouge.

4. Système d'arpentage selon l'une quelconque des revendications 1 à 3, caractérisé en ce que la source lumineuse (5) produit des éclairs.

5. Système d'arpentage selon la revendication 4, caractérisé en ce que les éclairs sont synchronisés avec la fréquence de balayage de la caméra vidéo (7, 8).

6. Système d'arpentage selon l'une quelconque des revendications 1 à 5, caractérisé en ce que la caméra vidéo (7, 8) est une caméra à matrice d'éléments photosensibles à transfert de charges (C.C.D).

7. Système d'arpentage selon l'une quelconque des revendications 1 à 6, caractérisé en ce que l'appareil de mesurage (1) comporte des dispositifs (9) pour la détermination de la distance de l'objet (2) sur la base de l'écart mutuel des deux points d'image (3a, 4a).

8. Système d'arpentage selon l'une quelconque des revendications 1 à 7, caractérisé en ce que l'appareil de mesurage (1) comporte des dispositifs (9) pour la détermination de la vitesse relative de l'objet.

9. Système d'arpentage selon l'une quelconque des revendications 1 à 8, caractérisé en ce que l'appareil de mesurage (1) comporte des dispositifs (9) pour la détermination de l'inclinaison de l'objet (2) par rapport à l'appareil de mesurage (1).

10. Système d'arpentage selon l'une quelconque des revendications 1 à 9, caractérisé en ce qu'il comporte un dispositif (12) par lequel l'appareil de mesurage (1) suit l'objet.

11. Système d'arpentage selon l'une quelconque des revendications 1 à 10, caractérisé en ce qu'il comporte des dispositifs (14, 15) pour la transmission d'informations de l'appareil de mesurage (1) à l'objet (2).

12. Système d'arpentage selon la revendication 11, caractérisé en ce que la transmission d'informations s'effectue au moyen de lumière.

13. Système d'arpentage selon la revendication 11 ou 12, caractérisé en ce que la transmission d'informations est effectuée par un faisceau très resserré, en particulier un rayon laser ou un faisceau de microondes.

14. Système d'arpentage selon l'une quelconque des revendications 1 à 13, caractérisé en ce que la caméra vidéo (7, 8) comporte un objectif (8) à distance focale variable et des dispositifs (9) pour l'évaluation de prises de vue faites avec des champs angulaires différents en vue de la détermination de la distance.

15. Système d'arpentage selon l'une quelconque des revendications 1 à 14, caractérisé en ce qu'il comporte des dispositifs (11) pour l'affichage/édition des résultats.

16. Système d'arpentage selon la revendication 15, caractérisé en ce qu'il comporte une mémoire tampon (10) pour les résultats.

17. Système d'arpentage selon l'une quelconque des revendications 1 à 16, caractérisé en ce qu'il comporte des dispositifs (16) pour l'éclairage d'une zone (17) de l'environnement immédiat de l'appareil de mesurage, des dispositifs (18) pour former l'image de cette zone (17) avec la caméra (7, 8) et des dispositifs (9) pour déterminer le mouvement propre de l'appareil de mesurage (1) sur la base de modifications de l'image (17a) de ladite zone (17).

18. Procédé de mesurage d'un objet, caractérisé en ce que l'objet est muni de deux rétroréflecteurs disposés à une distance connue l'un de l'autre et est illuminé avec une source lumineuse, en ce que l'image de la lumière réfléchie par les rétroréflecteurs est prise par une caméra vidéo et en ce que le mesurage est effectué par évaluation des lieux et des mouvements des points d'image des rétroréflecteurs.

## Claims

1. A surveying system for surveying an object, characterised in that the object (2) has two retroreflectors (3, 4) arranged at a known spacing, and in that a surveying instrument (1) is provided including a light source (5), a video camera (7, 8) and a means (9) which carries out the surveying by means of two image points (3a, 4a) which are defined by light reflected by the retroreflectors (3, 4).

2. A surveying system according to Claim 1, characterised in that the light source (5) is a white light source.

3. A surveying system according to Claim 1, characterised in that the light source (5) is an infrared light source.

4. A surveying system according to any one of Claims 1 to 3, characterised in that the light source (5) emits light pulses.

5. A surveying system according to Claim 4, characterised in that the light pulses are synchronised with the scanning frequency of the video camera (7, 8).

6. A surveying system according to any one of Claims 1 to 5, characterised in that the video camera (7, 8) is a matrix CCD camera.

7. A surveying system according to any one of Claims 1 to 6, characterised in that the surveying instrument (1) has means for determining the distance of the object (2) on the basis of the spacing apart of the two image points (3a, 4a).

8. A surveying system according to any one of Claims 1 to 7, characterised in that the surveying instrument (1) has means (9) for determining the relative speed of the object.

9. A surveying system according to any one of Claims 1 to 8, characterised in that the surveying instrument (1) has means (9) for determining the tilt of the object (2) relative to the surveying instrument (1).

10. A surveying system according to any one of Claims 1 to 9, characterised in that it has a tracking device (12) for the surveying instrument (1).

11. A surveying system according to any one of Claims 1 to 10, characterised in that it has means (14, 15) for transmitting information from the surveying instrument (1) to the object (2).

12. A surveying system according to Claim 11, characterised in that the transmission of the information takes place by means of light.

13. A surveying system according to Claim 11 or 12, characterised in that the transmission of information is effected with a narrowly focused beam, in particular a laser beam or a microwave beam.

14. A surveying system according to any one of Claims 1 to 13, characterised in that the video camera (7, 8) has a lens (8) of variable focal length and means (9) are provided for evaluating a plurality of exposures taken at different angles of view so as to determine the distance.

15. A surveying system according to any one of Claims 1 to 14, characterised in that it has means (11) for displaying/printing results.

16. A surveying system according to Claim 15, characterised in that it has a temporary memory (10) for the results.

17. A surveying system according to any one of Claims 1 to 16, characterised in that it has means (16) for illuminating a section (17) of the immediate vicinity of the surveying instrument, means (18) for producing an image of said section (17) using the camera (7, 8) and means (9) for determining the proper motion of the surveying instrument (1) on the basis of variations in the image (17a) of the section (17).

18. A method of surveying an object, characterised in that the object is provided with two retroreflectors arranged at a known spacing apart and is illuminated with a light source, and in that the image of the light reflected by the retroreflectors is produced by a video camera, and in that the surveying is effected by evaluation of the locations and movements of the image points of the retroreflectors.

# Fig.1

# Fig.2

EP 0 253 017 B1